(19) Europäisches Patentamt
European Patent Office
Office européen des brevets

(11) **EP 2 066 050 B1**

(12) **EUROPEAN PATENT SPECIFICATION**

(45) Date of publication and mention
of the grant of the patent:
**30.05.2012 Bulletin 2012/22**

(51) Int Cl.:
***H04H 20/18*** *(2008.01)*

(21) Application number: **08170088.2**

(22) Date of filing: **27.11.2008**

(54) **Device and method for synchronizing radio access logic entities of a wireless communication network**

Vorrichtung und Verfahren für die Funkzugriff-Logikeinheiten-Synchronisierung in einem drahtlosen Kommunikationssystem

Dispositif et procédé de synchronisation des entités logiques d'accès radio d'un réseau de communication sans fil

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.11.2007 FR 0759417**

(43) Date of publication of application:
**03.06.2009 Bulletin 2009/23**

(73) Proprietor: **Alcatel Lucent**
**75007 Paris (FR)**

(72) Inventors:
• **Germaneau, Alexis**
**91620 Nozay (FR)**
• **Balageas, Carine**
**91620 Nozay (FR)**
• **Conte, Alberto**
**91620 Nozay (FR)**

(74) Representative: **El Manouni, Josiane et al**
**Alcatel-Lucent International**
**32, avenue Kléber**
**92700 Colombes (FR)**

(56) References cited:
**WO-A-93/25012**       **US-A- 5 485 632**
**US-A1- 2005 163 064**   **US-A1- 2007 171 853**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention pertains to wireless communication networks, and more precisely the synchronization of radio access logic entities, which form part of such networks.

It should be noted that all types of wireless communication networks are affected by the invention, in particular cellular (or mobile) networks (such as GSM, GPRS/EDGE, UMTS or CDMA (2000) networks), and WLANs (or "Wireless Local Area Networks" such as WiMAX (a collection of the IEEE 802.16 and HiperMan standards, in particular) Wi-Fi (the IEEE 802.11g standard), ETSI HiperLAN/2 or those compliant with the 802.11a standard), so long as it is capable of broadcasting and/or multicasting mode content data (potentially multimedia content data) to mobile (or cellular or portable) communication terminals via radio access logic entities which are unsynchronized but which each have a local clock.

Here, the term "radio access logic entity" refers to any type of network device capable of setting access to radio resources (i.e. changing the characteristics of the physical layer and the data link layer (and its parameters) which is commonly associated with it) of a radio access network of a networks of the aforementioned type. Consequently, it may, for example, be an antenna sector or an antenna of a base station (or access point)

As is known to a person skilled in the art, whenever the users of mobile terminals are connected to certain wireless communication networks, and in particular to WiMAX networks, sometimes when they move and their terminals are forced to perform a handover from one radio access logic entity to another radio access logic entity, the quality of the received broadcast and/or multicast content is momentarily degraded or interrupted; their terminals may even become disconnected from the content broadcasting and/or multicasting service.

This type of situation may, for example, occur when a terminal is set to a television channel and prepares to leave the coverage area of a first antenna (logic entity), which has just sent the Nth data packet of the content being broadcast and/or multicast over said television channel, with the intent to enter the coverage area of a second antenna (logic entity), which has just sent the (N+m)th data packet of that same content (where m>1). At the time the handover occurs, the terminal has the Nth packet, and the next packet that it will receive from the second antenna will be the (N+m+1)th. Therefore, m packets will be lost, which results in a degradation in the quality of the content reassembled by its terminal (such as by its MPEG codec), or even a temporary interruption in the reassembly of the content, or even a disconnection of the broadcast and/or multicast service, if the duration of the interruption is greater than the average duration of a handover. A similar, though less problematic phenomenon would occur if the handover took place from the second antenna to the first one, due to the redundancy of m twice-received packets.

This drawback results from the fact that the logic entities rarely simultaneously receive IP data packets from a broadcast and/or multicast source (such as a radio network controller, or RNC, or multimedia content server), because the paths taken by these IP packets (and therefore the number of network devices traversed) are generally different, and also that their local clocks are not synchronized to a reference clock, so that they are incapable of retransmitting the same received data packets to the terminals at roughly the same time.

To remedy this drawback, it is possible, for example, to equip each logic entity (or the device that contains it) with a GPS receiver, and synchronize all of the local clock of the logic entities in a single synchronization area to the GPS time provided by the GPS system's reference clock. However, such a solution has proven costly.

Document WO9325012 discloses a method for synchronizing radio logic entities in a simulcast network.

The purpose of the invention is therefore to disclose an inexpensive alternative solution.

To that end, it discloses a method for synchronizing radio access logic entities that each have a local clock and form part of a wireless communication network capable of broadcasting and/or multicasting data packets which define content between a broadcast and/or multicast source and mobile communication terminals, via logic entities.

This transmission method is characterized in that it comprises the steps of:

- estimating, for each logic entity ($EL_k$), an area known as a network synchronization area, the time ($HRR_k$), with respect to a reference clock, at which it received a selected packet from the broadcast and/or multicast source, and then

- determining, for each logic entity ($EL_k$) of the synchronization area, a value ($V_k$) that represents the time difference between its reception time ($HRR_k$) and the latest reception time ($HRR_{k'}$) among those of the radio access logic entities, and

- ordering every logic entity of the synchronization area to wall a period of time equal to the value $V_k$) which was determined for it before retransmitting each packet received from the broadcast and/or multicast source to the terminals which are located within its synchronization area.

The inventive method may comprise other characteristics, which may be taken separately or in combination, in particular:

- for every logic entity of the synchronization area, it is possible, during a prior procedure, to determine its local time ($HLR_k$), with respect to the reference clock, and then the gap ($\Delta_k$) between this local time ($HLR_k$) and the time (HR) with respect to the reference clock at the moment when this local time ($HLR_k$) was determined;

  ➢ when a selected packet is received from the broadcast and/or multicast source, each logic entity in the synchronization area may note the time ($HLRP_k$) when that packet was received, with respect to its local clock, and then retransmitting a synchronization message comprising this reception time ($HLRP_k$) to a selected device. For each of the logic entities of the synchronization area, it is then possible to estimate the time ($HRR_k$), with respect to the reference clock, when said entity received that selected packet, based on the gap ($\Delta_k$) that was determined and on the local time ($HLRP_k$) contained within its received synchronization message;

  • for each of the logic entities of the synchronization area, it is possible to estimate the time ($HRR_k$), with respect to the reference clock, when said entity received that selected packet, by subtracting its determined gap ($\Delta_k$) from the local time ($HLRP_k$) contained within its received synchronization message;

  ➢ during the prior procedure, it is possible to transmit an auxiliary message to each logic entity of the synchronization area, then to record the transmission time ($HTM_k$) of that auxiliary message with respect to the reference clock, in order to communicate it to a selected device (SD) Furthermore, each logic entity can note the local time ($HRAL_k$), with respect to its local clock ($CL_k$), when said entity received the auxiliary message, then transmit to the selected device an auxiliary reply message which includes its local time ($HRAL_k$). Furthermore, the selected device may note the time ($HRAM_k$), with respect to the reference clock, when it receives every auxiliary reply message from a logic entity of the synchronization area, then it is possible to determine, for each of these logic entities: its gap ($\Delta_k$) based on the time when the auxiliary message was transmitted ($HTM_k$), the time when its auxiliary reply message was received ($HRAM_k$), and the local time ($HRAL_k$) contained within its auxiliary reply message;

  • for example, it is possible to determine every gap ($\Delta_k$) using the formula

$$\dot{\Delta}_k = HRAL_k - \left( \frac{HTM_k + HRAM_k}{2} \right).$$

The invention further discloses a device for synchronizing radio access logic entities that each have a local clock and form part of a wireless communication network capable of broadcasting and/or multicasting data packets which define content between a broadcast and/or multicast source and mobile communication terminals, via logic entities:
This synchronization device is characterized in that it comprises calculation means tasked with:

- estimating, for each logic entity ($EL_k$), an area known as a network synchronization area, the time ($HRR_k$), with respect to a reference clock, at which it received a selected packet from the broadcast and/or multicast source, and then
- determining, for each logic entity ($EL_k$) of the synchronization area, a value ($V_k$) that represents the time difference between its reception time ($HRR_k$) and the latest reception time ($HRR_k$) among those of the radio access logic entities, and
- ordering every logic entity of the synchronization area to wait a period of time equal to the value $V_k$) which was determined for it before retransmitting each packet received from the broadcast and/or multicast source to the terminals which are located within its synchronization area.

The inventive device may comprise other characteristics, which may be taken separately or in combination, in particular:

- its calculation means may be tasked with determining, for each logic entity of the synchronization area, during a prior procedure, its local time ($HLR_k$), with respect to the reference clock, then the gap ($\Delta_k$) between that local time ($HLR_k$) and the time with respect to the reference clock at the moment when this local time ($HLR_k$) was determined;

  ➢ calculation means may be tasked with estimating, for each entity of the synchronization area, during a prior procedure, the time ($HRR_k$); with respect to the reference clock, when said entity received the selected packet, based on its determined gap ($\Delta_k$) and a local time ($HLRP_k$) contained within a synchronization message, transmitted by the logic entity in response to the receipt of the selected packet, and indicating the reception time of that packet with respect to its local clock;

- its calculation means may be tasked with estimating, for each of said logic entities of the synchronization area, the time ($HRR_k$), with respect to the reference clock, when said entity received that selected packet, by subtracting its determined gap ($\Delta_k$) from the local time ($HLRP_k$) contained within its received synchronization message;

➢ during the prior procedure, its calculation means may be tasked with i) generating, addressed to the logic entities of the synchronization area, an auxiliary message requesting that they transmit their local times when the auxiliary message was received ($HRAL_k$) with respect to their local clocks ($CL_k$), ii) recording the time ($HTM_k$) when that auxiliary message was transmitted, with respect to the reference clock, iii) recording the time ($HRAM_k$) when each auxiliary reply message was received from a logic entity ($EL_k$) of the synchronization area, with respect to the reference clock, and iv) determining, for each of these entities, its gap ($\Delta_k$) based on the time when the auxiliary message was transmitted ($HTM_k$), the time when its auxiliary reply message was received ($HRAM_k$), and the local time ($HRAL_k$) contained within its auxiliary reply message;

- its calculation means may, for example, be tasked with determining each gap ($\Delta_k$) using the formula

$$\Delta_k = HRAL_k - \left( \frac{HTM_k + HRAM_k}{2} \right).$$

The invention further discloses a network device comprising a synchronization device of the type described above.

Such a device may, for example, constitute a (content-defining) data packet broadcast and/or multicast source for a wireless communication network.

The invention is particularly well suited, though not exclusively so, to WiMAX local wireless communication networks. However, generally speaking, the invention applies to all types of radio networks that support the broadcast and/or multicast of content data packets, in particular 3GPP MBMS. DVB-H, and WiFi networks (in particular for hard handover roaming).

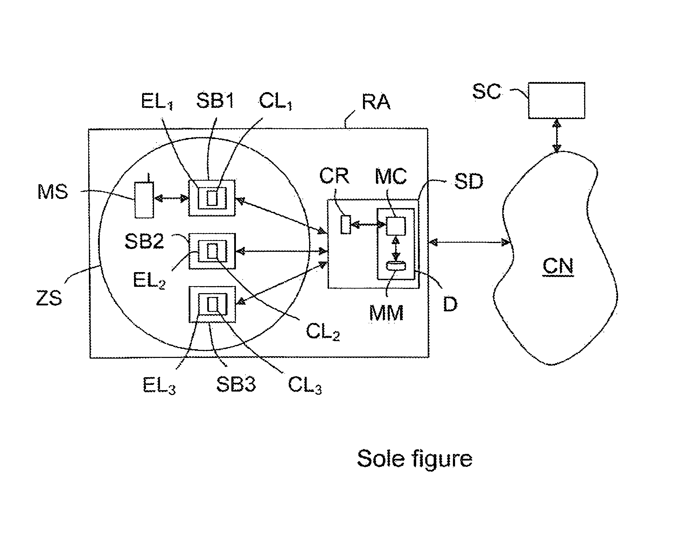

Other characteristics and advantages of the invention will become apparent upon examining the detailed description below, and the attached drawing, in which the sole figure schematically and functionally depicts a local wireless communication network comprising a base station equipped with an example embodiment of a synchronization device in accordance with the invention.

The attached drawing may serve not only to complete the invention, but may also contribute to defining it, if need be.

The object of the invention is to enable the synchronization of radio access logic entities, which form part of a wireless communication network.

In the following, it is assumed by way of a non-limiting example that the wireless communication network is a WiMAX local radio network. However, the invention the invention is not limited to this type of wireless communication network. Indeed, it pertains to all cellular (or mobile) networks (such as GSM, GPRS/EDGE, UMTS or CDMA (2000) networks), and WLANs (or "wireless Local Area Networks" such as WiMAX (a collection of the IEEE 802.16 and HiperMan standards, in particular) Wi-Fi (the IEEE 802.11g standard), ETSi HiperLAN/2 or those compliant with the 802.11 a standard), so long as it is capable of broadcasting and/or multicasting content data (potentially multimedia content data) to mobile (or cellular or portable) communication terminals via unsynchronized radio access logic entities.

Furthermore, in the following it is assumed by way of a non-limiting example that the communication terminals (MS) are mobile (or cellular) telephones. However, the invention is not limited to this type of communication terminal. Indeed, it pertains to any mobile (or portable or cellular) radio communication device with a wireless communication interface, which is at least capable of receiving data (which defines content, potentially multimedia content (such as television or radio programs or videos) transmitted by waves. Consequently, it may also, in particular, be a laptop computer, or a personal digital assistant (or PDA), so long as it is equipped with radio or satellite communication means.

As is schematically and functionally depicted in the sole figure, a tireless local network (here a WiMAX network), implementing a content broadcasting and/or multicasting service (potentially an MBS ("Multicast Broadcast Service")), comprises at least a radio access network RA, generally known as an ASN ("Access Service Network"), which the terminals MS may connect to and a core network CN coupled to the radio access network RA, to which one or more content servers (or sources) SC may be coupled (or connected).

The radio access network RA particularly comprises at least one base station (or access point) SBi, generally known as a BS ("Base Station"), by which the terminals MS may connect to the wireless local network, and at least one broadcast and/or multicast source SD coupled to at least one of the base stations SBi.

The broadcast and/or multicast source SD may, for example, be a radio network controller. If so, it is particularly tasked with broadcasting and/or multicasting data packets that define content to be broadcast and/or multicast, which are transmitted to it by a content server (or source) SC, to one or more base stations SBi tasked with broadcasting and/or multicasting that same content to terminals MS which are located within its (or their) coverage area. However, the broadcast and/or multicast source DS may also be a content server (or source).

For example, the content may be television or music programs, or videos. However, the invention pertains to all types of content.

Each base station SBi comprises at least one radio access logic entity ELk. As a reminder, the term "radio access logic entity" here refers to a network device that sets access to radio resources (i.e. is capable of changing the characteristics of the physical later and the associated data link layer) of a radio access network RA.

In the following, it is assumed, by way of an illustrative and non-limiting example, that the logic entities $EL_k$ are (single-sector) antennas. However, a logic entity may also be one sector of a multi-sector antenna, or a particular range of frequencies (if the technology supports multiple different ranges of frequencies to define the channels), for example.

Each logic entity (here, an antenna) $EL_k$ comprises a buffer memory, in which it may store data packets from the broadcast and/or multicast source SD, and a local clock $CL_k$. It is further capable of scheduling the transmission of packets to terminals MS of its synchronization area ZS, over the radio interface, said packets being stored in its buffer memory, potentially based on their sequencing (defined by their sequence number, for transmission via GRE tunnels (or a similar technology, such as incremental IPv4 identifiers or 3GPP frame protocol sequence number).

It should be noted that it is necessary to be able to "identify" the content data packets between the broadcast and/or multicast source SD and the antennas of the radio access network RA. The notion of sequencing is not strictly necessary for the invention. However, it is necessary that all the antennas of an area known as the "synchronization area" (defined above) are capable of nothing the time when a single selected packed was received ($HLRP_k$ - defined below).

In the non-limiting example depicted, three base stations SB1 to SB3 (i = 1 to 3), each comprising a single logic entity $EL_k$ (k = 1 to 3) have been illustrated. However, the invention applies so long as the radio access network RA comprises at least two logic entities $EL_k$ located within a single synchronization area ZS, and potential installed within a single base station SBi.

Here, the term "synchronization area" refers to a geographic area within which the same content is broadcast and/or multicast, and within which the terminals MS may perform handovers without becoming disconnected from the content broadcasting and/or multicasting service (for example, MBS) in normal operating mode.

In order to synchronize the logic entities $EL_k$ (here, antennas) of a synchronization area ZS, the invention discloses a synchronization device D. As depicted in the sole figure, such a device D comprises at least one calculating module MC tasked with acting each time a synchronization is requested. Preferably, this action takes place periodically, such as every hour. However, this is not mandatory. It may instead by triggered on request; such as one sent from the network's operator.

It should be noted that in the non-limiting example depicted, the device D is advantageously installed within the broadcast and/or multicast source SD which supplies the base stations SBi of a synchronization area ZS (to which it is connected, as here it constitutes a radio network controller, though in a non-limiting fashion) with (IP) data packets to be broadcast and/or multicast. However, this is not mandatory. The device D may instead be installed in another network device coupled to a broadcast and/or multicast source SD, or constitute a network device coupled to at least one broadcast and/or multicast source SD,

Each time it acts, the calculating module MC estimates, for each logic entity $EL_k$ of a synchronization area ZS of the network, the time $HRR_k$ when said entity received a selected packed from the broadcast and/or multicast, source SD. Each of these times $HRR_k$ is defined by a single reference clock CR. This clock may, for example, be the local clock of the broadcast and/or multicast source SD (as depicted in the sole figure). However, this is not mandatory, In the event of periodic operation, a content data packet every N is used to automatically trigger a synchronization. An example method for obtaining these times $HRR_k$ shall be described later.

Next, for each logic entity $EL_k$ of the synchronization area ZS in question (potentially the only one), the calculating module MC determines a value $V_k$ representing the time difference between its reception time $HRR_k$ and the latest reception time $HRR_k$, among all of the various logic entities of the synchronization area ZS in question. An example method for obtaining these values $V_k$ shall be described later.

Finally, the calculating module MC generates, for each logic entity $EL_k$ of the synchronization area ZS in question; a message ordering it to wait for a period of time equal to the value $V_k$ which was determined for it before retransmitting each content (IP) data packet that it receives from the broadcast and/or multicast source SD to the terminals MS which are located within its synchronization area ZS.

It should be understood that each logic entity $EL_k$ will then store each received content IP packet in its buffer memory, for a period of time equal to the value $V_k$, before retransmitting it to the terminals MS.

By using this mechanism for synchronizing the logic entities $EL_k$ of a synchronization area ZS, said entities may now retransmit a single content IP packet received from a broadcast and/or multicast source at roughly the same time, thereby preventing a terminal MS from losing multiple content IP packets, or from receiving duplicate content IP packets, during a handover procedure.

To obtain the times $HRR_k$, the calculating module MC may, for example, implement the method described above. It relies upon previously: knowing the gap $\Delta_k$ between the local time $HLR_k$ of each logic entity $EL_k$ (defined by its local clock $CL_k$) and the time HR with respect to the reference clock CR at the moment when this local time $HLR_k$ was determined.

This prior knowledge of the various gaps $\Delta_k$ may be obtained during a so-called acquisition procedure, which may potentially be carried out periodically, such as by using the same interval as the one used for synchronizing the logic entities $EL_k$. It should be understood that each acquisition procedure must proceed prior to a synchronization procedure whose gaps $\Delta_k$ it provides.

Each acquisition procedure is carried out by the device D for its own synchronization area ZS. It consists of first determining, for each logic entity $EL_k$ of the synchronization area ZS in question, its local time $HLR_k$ with respect to the reference clock CR which is associated with that synchronization area ZS in question. To do so, it is possible, for example, to transmit an auxiliary message MA to the various logic entities $EL_k$ of the synchronization area ZS, and to record the time $HTM_k$ when this auxiliary message MA was transmitted with respect to the reference clock CR.

This auxiliary message MA is preferentially generated by the device D and transmitted by the broadcast and/or multicast source SD to the various logic entities $EL_k$ of the synchronization area ZS in question. Furthermore, it's the broadcast and/or multicast source SD which notes the time $HTM_k$ when an auxiliary message MA is transmitted when compared with its reference clock CR, and which provides it to the device D.

Each logic entity $EL_k$ which receives an auxiliary message MA notes its local reception time $HRAL_k$. It should be understood that each local reception time $HRAL_k$ is defined by the local clock $CL_k$ of the logic, entity $EL_k$. Once the logic entity $EL_k$ has noted its local reception time $HRAL_k$, it transmits it to a selected network device, which is preferably the one which transmitted the auxiliary message MA (here, the broadcast and/or multicast source SD), by means of an auxiliary reply message $MRA_k$.

When the selected network device receives an auxiliary reply message $MRA_k$, it notes the reception time $HRAM_k$. It should be understood that each reception time $HRAM_k$ is defined by the reference clock CR. This is why it is preferable that it be the same network device that transmits the auxiliary message MA and receives the auxiliary reply messages $MRA_k$. In other words, it is advantageous that the selected network device be the broadcast and/or multicast source SD.

The selected network device that receives the auxiliary reply messages $MRA_k$ (here, the broadcast and/or multicast source SD) transmits the reception times $HRAM_k$ of these auxiliary reply messages $MRA_k$ to the device D, so that its calculating module MC may determine, for each logic entity $EL_k$ of the synchronization area ZS in question its gap $\Delta_K$, based on the time $HTM_k$ when the auxiliary message MA was transmitted, the time $HRAM_k$ when its auxiliary reply message $MRA_k$ was received, and the local time $HRAL_k$ contained within its auxiliary reply message $MRA_k$.

For example, the calculating module MC may determine each gap $\Delta_k$ by means of the formula

$$\Delta_k = HRAL_k - \left( \frac{HTM_k + HRAM_k}{2} \right).$$ It should be understood that this calculation formula, which is non-limiting, is well suited to the situation (the present one) in which the same network device both transmits the auxiliary messages MA and receives the auxiliary reply messages $MRA_k$. It should also be noted that this formula corresponds to a situation in which the duration separating the moment when an auxiliary message MA is received and the moment when the corresponding auxiliary reply message $MRA_k$ is sent is considered to be negligible.

Once the calculating module MC has the gaps $\Delta_k$, it may obtain the times $HRR_k$ needed for the synchronization procedure.

Each synchronization procedure is automatically triggered when the logic entities $EL_k$ receive a single selected packet from the broadcast and/or multicast source SD.

When such a packet (for example, a content IP packet every N) is received, each logic entity $EL_k$ of a synchronization area ZS notes the time $HLRP_k$ when that packet was received, with respect to its local clock $CL_k$. Next, each logic entity $EL_k$ of that synchronization area ZS generates a synchronization message $MR_k$ comprising its own reception time $HLRP_k$ and transmits it to a selected device, for example the broadcast and/or multicast source SD (or the device D itself).

When the selected network device receives a synchronization message $MR_k$, it communicates it to the device D so that its calculating module MC estimates, for each logic entity $EL_k$ of the synchronization area ZS in question, the

time HRR$_k$ (defined by the reference clock CR) when said entity received the selected packet, based on its gap $\Delta_k$ (determined during the acquisition procedure) and the local time HLRP$_k$ contained within its received synchronization message MR$_k$.

For example, the calculating module MC may determine each time HRR$_k$ using the non-limiting formula *HRR$_k$* =HLRP$_k$ - $\Delta_k$. It should be noted that the time HRR$_k$ constitutes a sort of corrected local reception time within a logic entity EL$_k$, i.e. the one with respect to the reference clock CR.

To obtain the aforementioned values V$_k$ during a synchronization procedure, the calculating module MC may, for example, implement the method described above. First, it gathers all of the reception times HRR$_K$ of the various logic entities EL$_k$ of the synchronization area ZS in question. Next, it determines which one is the latest, such as by using the formula *MAX[X]*=max({*HRR$_k$[X]*}), where X refers to the originally selected packet of the synchronization procedure and *HRR$_k$[X]* refers to the reception time HRR$_k$ for the selected packet X in question. Each value V$_k$ is then with respect to the formula *V$_k$ = MAX[X]-HRR$_k$[X]*.

It is important to note that a device D may act upon a single synchronization area, or upon multiple different synchronization areas (centralized operation).

Furthermore, the inventive synchronization device D, and in particular its calculation module MC and, if applicable, its storage module MM, may be constructed in the form of electronic circuits, software (or computing) module, or a combination of circuits and software.

It is also important to note that the invention may also be considered to be a method for synchronizing logic entities EL$_k$ which may, in particular, be implemented by means of a synchronisation device D as described above. As the functionalities afforded by the implementation of the inventive method are identical to those afforded by the device D described above, only the combination of main functionalities afforded by the method is described above.

This synchronization method comprises the steps of:

- estimating, for each logic entity EL$_k$ of a synchronization area ZS of the network, the time HRR$_k$, with respect to the reference clock CR, when said entity received a selected packet from the broadcast and/or multicast source SD, then
- determining, for each logic entity EL$_k$ of the synchronization area, a value V$_k$ that represents the time difference between its reception time HAR$_K$ and the latest reception time HRR$_k$ among those of the radio access logic entities, and
- ordering each logic entity El$_k$ of the synchronization area ZE to wait for a period of time equal to the value V$_k$ which has been determined for it before retransmitting each packet received from the broadcast and/or multicast, source SD to the terminals MS which are located within its synchronization area ZS.

The invention is particularly advantageous because it operates within the application layer, and therefore has no impact on the transporting of the packets (naturally, not including the time difference in their retransmission by the various logic entities EL$_k$ based on the values V$_k$).

The invention is not limited to the embodiments of the synchronization device, network device, and synchronization method described above, which are given only by way of example; rather, it encompasses all variations that a person skilled in the art may envision within the framework of the claims below.

## Claims

1. A method for synchronizing radio access logic entities (EL$_k$) each having a local clock (CL$_k$) and forming part of a wireless communication network capable of broadcasting and/or multicasting content-defining data packets between a broadcast and/or multicast source (SD) and mobile communication terminals MS), via said logic entities (EL$_k$), comprising the steps of i) estimating, for each logic entity (EL$_k$) of a so-called synchronization area (ZS) of said network, the time (HRR$_k$), with respect to a reference clock (CR), when said entity received a selected packet from said broadcasting and/or multicasting source (SD), and then ii) determining, for each logic entity (EL$_k$) of said synchronization area (ZS), a value (V$_K$) representative of the time difference between its reception time (HRR$_k$) and the latest reception time (HRR$_k$) among those of said logic entities, and iii) ordering each logic entity (EL$_{k)}$ of said synchronization area (Zs) to wait for a period of time equal to the value (V$_k$) which was determined for it before retransmitting each packet received from said broadcast and/or multicast source (SD) to the terminals (MS) located within its synchronization area (ZS).

2. A method according to claim 1, **characterized in that** for each logic entity (EL$_k$) of said synchronization area (ZS), during a prior procedure the following are determined: its local time (HLR$_k$) with respect to said reference clock (CR), then the gap ($\Delta_k$) between that local time (HLR$_k$) and the time (HR) with respect to said reference clock (CR) at the moment when said local time (HLR$_k$) is determined.

3. A method according to claim 2, **characterized in that** when a selected packet is received from said broadcast and/or multicast source (SD), each logic entity ($EL_k$) of said synchronization area (ZS) notes the time ($HLRP_k$) when said packet was received, with respect to its local clock ($CL_k$), then transmits a synchronization message comprising said reception time ($HLRP_k$) to a selected device (SD), and **in that**, for each of said logic entities ($EL_k$) of said synchronization area (ZS), the time ($HRR_k$), with respect to said reference clock (CR), when said entity received said selected packet is estimated, based on its determined gap ($\Delta_k$) and the local time ($HLRP_k$) contained within its received synchronization message.

4. A method according to claims 3, **characterized in that**, for each of said logic entities ($EL_k$) of said synchronization area (ZS) the time ($HRR_k$), with respect to said reference clock (CR), when said entity received said selected packet is estimated by subtracting its determined gap ($\Delta_k$) from the local time ($HLRP_k$) contained within its received synchronization message.

5. A method according to any of claims 2 to 4, **characterized in that** during said prior procedure, an auxiliary message is transmitted to each logic entity ($EL_k$) of said synchronization area (ZS), the time ($HTM_k$) when this auxiliary message is transmitted, with respect to said reference clock (CR), is recorded, and this auxiliary message is then communicated to a selected device (SD), **in that** each logic entity ($EL_k$) notes the local time ($HRAL_k$), with respect to its local clock ($CL_k$), when it receives said auxiliary message, then transmits to said selected device (SD) an auxiliary reply message including said local time ($HRAL_k$), and **in that** said selected device (SD) notes the time ($HRAM_k$), with respect to said reference clock (CR), when it receives each auxiliary reply message from a logic entity ($EL_k$) of said synchronization area (ZS), then, for each of these logic entities ($EL_k$), its gap ($\Delta_k$) is determined based on said transmission time of the auxiliary message ($HTM_k$), said reception time of the auxiliary message ($HRAM_k$) and said local time ($HRAL_K$) contained within its auxiliary reply message.

6. A method according to claim 5, **characterized in that** each gap ($\Delta_k$) is determined using the formula

$$\Delta_k = HRAL_k - \left( \frac{HTM_k + HRAM_k}{2} \right).$$

7. A device (D) for synchronizing radio access logic entities ($EL_k$) each having a local clock ($CL_k$) and forming part of a wireless communication network capable of broadcasting and/or multicasting content-defining data packets between a broadcast and/or multicast source (SD) and mobile communication terminals (MS), via logic entities ($EL_k$), comprising calculation means (MC) configured to i) estimate, for each logic entity ($EL_k$) of a so-called synchronization area (ZS) of said network, the time ($HRR_k$), with respect to a reference clock (CR), when said entity received a selected packet from said broadcast and/or multicast source (SD), and then to ii) determine, for each logic entity ($EL_k$) of said synchronization area (ZS), a value ($V_k$) representative of the time difference between its reception time ($HRR_k$) and the latest reception time ($HRR_k$) among those of said logic entities, and to iii) order each logic entity ($EL_k$) of said synchronization area (Zs) to wait for a period of time equal to the value ($V_k$) which was determined for it before retransmitting each packet received from said broadcast and/or multicast source (SD) to the terminals (MS) located within its synchronization area (ZS).

8. A device according to claim 7, **characterized in that** said calculation means (MC) are configured to determine, for each logic entity ($EL_k$) of said synchronization area (ZS), during a prior procedure: its local time ($HLR_k$) with respect to said clock (CR), then the gap ($\Delta_k$) between that local time ($HLR_k$) and the time (HR) with respect to said reference clock (CR) at the moment when said local time ($HLR_k$) is determined.

9. A device according to claim 8, **characterized in that** said calculation means (MC) are configured to estimate, for each of said logic entities ($EL_k$) of said synchronization area (ZS), the time ($HRR_k$), with respect to said reference clock (CR), when said entity received said selected packet, based on its determined gap ($\Delta_k$) and the local time ($HLRP_k$), contained within its received synchronization message transmitted by said logic entity ($EL_k$) in response to the reception of said selected packet, and indicating the time when said packet was received with respect to its local clock ($CL_k$).

10. A device according to claim 9, **characterized in that** said calculation means (MC) are configured to estimate, for each of said logic entities ($EL_k$) of said synchronization area (ZS) the time ($HRR_k$), with respect to said reference clock (CR), when said entity received said selected packet, by subtracting its determined gap ($\Delta_k$) from the local time ($HLRP_k$) contained within its received synchronization message.

11. A device according to any of claims 8 to 10, **characterized in that** during said previous procedure, said calculation means (MC) are configured to i) generate, addressed to said logical entities (EL$_k$) of said synchronization area (ZS), an auxiliary message requesting that they transmit their local times when the auxiliary message was received (HRAL$_k$) with respect to their local clocks (CL$_k$), ii) record the time (HTM$_k$) when that auxiliary message was transmitted, with respect to the reference clock, iii) record the time (HRAM$_k$) when each auxiliary reply message was received from a logic entity (EL$_k$) of the synchronization area, with respect to the reference clock, and iv) determining, for each of these entities, its gap ($\Delta_k$) based on the time when the auxiliary message was transmitted (HTM$_k$), the time when its auxiliary reply message was received (HRAM$_k$), and the local time (HRAL$_k$) contained within its auxiliary reply message

12. A device according to claim 11, **characterized in that** said calculation means (CM) are configured to determine

each gap ($\Delta_k$) by means of the formula $\Delta_k = HRAL_k - \left( \dfrac{HTM_k + HRAM_k}{2} \right).$

13. A network device (SD), **characterized in that** it comprises a synchronization device (D) according to any of claims 7 to 12.

14. A network device according to claims 13, **characterized in that** it constitutes a broadcast and/or multicast source (SD) of content-defining data packets for a wireless communication network.

**Patentansprüche**

1. Verfahren zum Synchronisieren von logischen Funkzugangseinheiten (EL$_k$), welche jeweils einen lokalen Takt (CL$_k$) aufweisen und Bestandteil eines drahtlosen Kommunikationsnetzwerks sind, welches dazu ausgelegt ist, inhaltsbestimmende Datenpakete über die besagten logischen Einheiten (EL$_k$) zwischen einer Broadcast- und/oder Multicast-Quelle (SD) und mobilen Kommunikationsendgeräten (MS) zu broadcasten und/oder multicasten, die folgenden Schritte umfassend: i) Schätzen, für jede logische Einheit (EL$_k$) eines sogenannten Synchronisationsbereichs (ZS) des besagten Netzwerks, der Uhrzeit (HRR$_k$), bezogen auf einen Referenztakt (CR), zu welcher die besagte Einheit ein ausgewähltes Paket von der besagten Broadcasting- und/oder Multicasting-Quelle (SD) empfangen hat, und anschließend ii) Ermitteln, für jede logische Einheit (EL$_k$) des besagten Synchronisationsbereichs (ZS), eines Wertes (V$_k$), welcher für die Zeitdifferenz zwischen dessen Empfangszeit (HRR$_k$) und der letzten Empfangszeit (HRR$_k$) unter denjenigen der besagten logischen Einheiten repräsentativ ist, und iii) Erteilen eines Befehls an jede logische Einheit (EL$_k$) des besagten Synchronisationsbereichs (Zs), während einer Zeitspanne, welche gleich dem Wert (V$_k$) ist, welcher dafür ermittelt wurde, zu warten, bevor sie jedes von der besagten Broadcast- und/oder Multicast-Quelle (SD) empfangene Paket an die innerhalb ihres Synchronisationsbereichs (ZS) angeordneten Endgeräte (MS) weiterleitet.

2. Verfahren nach Anspruch 1, **dadurch gekennzeichnet, dass** für jede logische Einheit (EL$_k$) des besagten Synchronisationsbereichs (ZS) während eines vorausgehenden Vorgangs ermittelt werden: ihre lokale Uhrzeit (HLR$_k$) bezogen auf den besagten Referenztakt (CR), und anschließend die Diskrepanz ($\Delta_k$) zwischen dieser lokalen Uhrzeit (HLR$_k$) und der Uhrzeit (HR), bezogen auf den besagten Referenztakt (CR), zum Zeitpunkt der Ermittlung der besagten lokalen Uhrzeit (HLR$_k$).

3. Verfahren nach Anspruch 2, **dadurch gekennzeichnet, dass**, wenn ein ausgewähltes Paket von der besagten Broadcast- und/oder Multicast-Quelle (SD) empfangen wird, jede logische Einheit (EL$_k$) des besagten Synchronisationsbereichs (ZS) die Uhrzeit (HLRP$_k$), zu welcher das besagte Paket empfangen wurde, bezogen auf ihren lokalen Takt (CL$_k$), notiert und anschließend eine Synchronisationsnachricht mit der besagten Empfangszeit (HLRP$_k$) an eine ausgewählte Vorrichtung (SD) überträgt, und dass, für eine jede der besagten logischen Einheiten (EL$_k$) des besagten Synchronisationsbereichs (ZS), die Uhrzeit (HRR$_k$), bezogen auf den besagten Referenztakt (CR), zu welcher die besagte Einheit das besagte ausgewählte Paket empfangen hat, auf der Basis der ermittelten Diskrepanz ($\Delta_k$) und der in der empfangenen Synchronisationsnachricht enthaltenen lokalen Uhrzeit (HLRP$_k$) geschätzt wird.

4. Verfahren nach Anspruch 3, **dadurch gekennzeichnet, dass**, für eine jede der besagten logischen Einheiten (EL$_k$) des besagten Synchronisationsbereichs (ZS), die Uhrzeit (HRR$_k$), bezogen auf den besagten Referenztakt (CR),

**9**

zu weicher die besagte Einheit das besagte ausgewählte Paket empfangen hat, durch Subtrahieren der ermittelten Diskrepanz ($\Delta_k$) von der in der empfangenen Synchronisationsnachricht enthaltenen lokalen Uhrzeit ($HLRP_k$) geschätzt wird.

5. Verfahren nach einem beliebigen der Ansprüche 2 bis 4, **dadurch gekennzeichnet, dass** während des besagten vorausgehenden Vorgangs eine zusätzliche Nachricht an jede logische Einheit ($EL_k$) des besagten Synchronisationsbereichs (ZS) übertragen wird, die Uhrzeit ($HTM_k$), zu welcher diese zusätzliche Nachricht übertragen wird, bezogen auf den besagten Referenztakt (CR), aufgezeichnet wird und diese zusätzliche Nachricht anschließend an eine ausgewählte Vorrichtung (SD) übermittelt wird, dass jede logische Einheit ($EL_k$) die lokale Uhrzeit ($HRAL_k$), bezogen auf ihren lokalen Takt ($CL_k$), zu welcher sie die besagte zusätzliche Nachricht empfängt, notiert und anschließend eine zusätzlichen Antwortnachricht mit der besagten lokalen Uhrzeit ($HRAL_k$) an die besagte ausgewählte Vorrichtung (SD) überträgt, und dass die besagte ausgewählte Vorrichtung (SD) die Uhrzeit ($HRAM_k$), bezogen auf den besagten Referenztakt (CR), zu welcher sie jede zusätzlichen Antwortnachricht von einer logischen Einheit ($EL_k$) des besagten Synchronisationsbereichs (ZS) empfängt, notiert und anschließend für eine jede dieser logischen Einheiten ($EL_k$) die Diskrepanz ($\Delta_k$) auf der Basis der besagten Übertragungszeit der zusätzlichen Nachricht ($HTM_k$), der besagten Empfangszeit der zusätzlichen Nachricht ($HRAM_k$) und der in der zusätzlichen Antwortnachricht enthaltenen lokalen Uhrzeit ($HRAL_k$) ermittelt wird.

6. Verfahren nach Anspruch 5, **dadurch gekennzeichnet, dass** jede Diskrepanz ($\Delta_k$) unter Verwendung der folgenden Formel ermittelt wird:

$$\Delta_k = HRAL_k - \left( \frac{HTM_k + HRAM_k}{2} \right).$$

7. Vorrichtung (D) zum Synchronisieren von logischen Funkzugangseinheiten ($EL_k$), welche jeweils einen lokalen Takt ($CL_k$) aufweisen und Bestandteil eines drahtlosen Kommunikationsnetzwerks sind, weiches dazu ausgelegt ist, inhaltsbestimmende Datenpakete über logische Einheiten ($EL_k$) zwischen einer Broadcast- und/oder Multicast-Quelle (SD) und mobilen Kommunikationsendgeräten (MS) zu broadcasten und/oder multicasten, umfassend Berechnungsmittel (MC), die für das Durchführen der folgenden Schritte konfiguriert sind: i) Schätzen, für jede logische Einheit ($EL_k$) eines sogenannten Synchronisationsbereichs (ZS) des besagten Netzwerks, der Uhrzeit ($HRR_k$), bezogen auf einen Referenztakt (CR), zu welcher die besagte Einheit ein ausgewähltes Paket von der besagten Broadcast- und/oder Multicast-Quelle (SD) empfangen hat, und anschließend ii) Ermitteln, für jede logische Einheit ($EL_k$) des besagten Synchronisationsbereichs (ZS), eines Wertes ($V_k$), welcher für die Zeitdifferenz zwischen dessen Empfangszeit ($HRR_k$) eines Wertes ($V_k$), welcher für die Zeitdifferenz zwischen dessen Empfangszeit ($HRR_k$) und der letzten Empfangszeit ($HRR_k$) unter denjenigen der besagten logischen Einheiten repräsentativ ist, und iii) Erteilen eines Befehls an jede logische Einheit ($EL_k$) des besagten Synchronisationsbereichs (Zs), während einer Zeitspanne, welche gleich dem Wert ($V_k$) ist, welcher dafür ermittelt wurde, zu warten, bevor sie jedes von der besagten Broadcast- und/oder Multicast-Quelle (SD) empfangene Paket an die innerhalb ihres Synchronisationsbereichs (ZS) angeordneten Endgeräte (MS) weiterleitet.

8. Vorrichtung nach Anspruch 7, **dadurch gekennzeichnet, dass** die besagten Berechnungsmittel (MC) dafür konfiguriert sind, während eines vorausgehenden Vorgangs für jede logische Einheit ($EL_k$) des besagten Synchronisationsbereichs (ZS) zu ermitteln: ihre lokale Uhrzeit ($HLR_k$) bezogen auf den besagten Referenztakt (CR), anschließend die Diskrepanz ($\Delta_k$) zwischen dieser lokalen Uhrzeit ($HLR_k$) und der Uhrzeit (HR), bezogen auf den besagten Referenztakt (CR), zum Zeitpunkt der Ermittlung der besagten lokalen Uhrzeit ($HLR_k$).

9. Vorrichtung nach Anspruch 8, **dadurch gekennzeichnet, dass** die besagten Berechnungsmittel (MC) dafür konfiguriert sind, für eine jede der besagten logischen Einheiten ($EL_k$) des besagten Synchronisationsbereichs (ZS) die Uhrzeit ($HRR_k$), bezogen auf den besagten Referenztakt (CR), zu welcher die besagte Einheit das besagte ausgewählte Paket empfangen hat, auf der Basis der ermittelten Diskrepanz ($\Delta_k$) und der in der empfangenen, von der besagten logischen Einheit ($EL_k$) in Antwort auf den Empfang des besagten ausgewählten Pakets übertragenen Synchronisationsnachricht enthaltenen lokalen Uhrzeit ($HLRP_k$), welche die Zeit angibt, zu welcher das besagte Paket bezogen auf ihren lokalen Takt ($CL_k$) empfangen wurde, zu schätzen.

10. Vorrichtung nach Anspruch 9, **dadurch gekennzeichnet, dass** die besagten Berechnungsmittel (MC) dafür konfiguriert sind, für eine jede der besagten logischen Einheiten ($EL_k$) des besagten Synchronisationsbereichs (ZS) die Uhrzeit ($HRR_k$), bezogen auf den besagten Referenztakt (CR), zu welcher die besagte Einheit das besagte ausgewählte Paket empfangen hat, durch Subtrahieren der ermittelten Diskrepanz ($\Delta_k$) von der in der empfangenen Synchronisationsnachricht enthaltenen lokalen Uhrzeit ($HLRP_k$) zu schätzen.

11. Vorrichtung nach einem beliebigen der Ansprüche 8 bis 10, **dadurch gekennzeichnet, dass**, während des besagten vorausgehenden Vorgangs, die besagten Berechnungsmittel (MC) für die folgenden Schritte konfiguriert sind i) Erzeugen, adressiert an die besagten logischen Einheiten ($EL_k$) des besagten Synchronisationsbereichs (ZS), einer zusätzliche Nachricht, welche anfordert, dass diese deren lokale Uhrzeit, zu welcher die zusätzliche Nachricht empfangen wurde ($HRAL_k$), bezogen auf deren lokalen Takte (CL), übermitteln ii) Aufzeichnen der Uhrzeit ($HTM_k$), zu welcher diese zusätzliche Nachricht übertragen wurde, bezogen auf den Referenztakt, iii) Aufzeichnen der Uhrzeit ($HRAM_k$), zu welcher jede zusätzliche Antwortnachricht von einer logischen Einheit ($EL_k$) des Synchronisationsbereichs empfangen wurde, bezogen auf den Referenztakt, und iv) Ermitteln, für eine jede dieser Einheiten, der Diskrepanz ($\Delta_k$) auf der Basis der Uhrzeit, zu welcher die zusätzliche Nachricht übertragen wurde ($HTM_k$), der Uhrzeit, zu welcher die zusätzliche Antwortnachricht empfangen wurde ($HRAM_k$), und der in der zusätzlichen Antwortnachricht enthaltenen lokalen Uhrzeit ($HRAL_k$).

12. Vorrichtung nach Anspruch 11, **dadurch gekennzeichnet, dass** die besagten Berechnungsmittel (CM) dafür konfiguriert sind, jede Diskrepanz ($\Delta_k$) anhand der folgenden Formel zu ermitteln:

$$\Delta_k = HRAL_k - \left( \frac{HTM_k + HRAM_k}{2} \right).$$

13. Netzwerkvorrichtung (SD), **dadurch gekennzeichnet, dass** sie eine Synchronisationsvorrichtung (D) gemäß einem beliebigen der Ansprüche 7 bis 12 umfasst.

14. Netzwerkvorrichtung nach Anspruch 13, **dadurch gekennzeichnet, dass** sie eine Broadcast- und/oder Multicast-Quelle (SD) von inhaltsbestimmenden Datenpaketen für ein drahtloses Kommunikationsnetzwerk darstellt.

## Revendications

1. Procédé pour synchroniser des entités logiques d'accès radio ($EL_k$) présentant chacune une horloge locale ($CL_k$) et faisant partie d'un réseau de communication sans fil capable de diffuser et/ou de multidiffuser des paquets de données définissant un contenu entre une source de diffusion et/ou de multidiffusion (SD) et des terminaux de communication mobile (MS), par l'intermédiaire desdites entités logiques ($EL_k$), comprenant les étapes i) estimer, pour chaque entité logique ($EL_k$) d'une zone de synchronisation (ZS) dudit réseau, l'heure ($HRR_k$), par rapport à une horloge de référence (CR), à laquelle ladite entité a reçu un paquet sélectionné à partir de ladite source de diffusion et/ou de multidiffusion (SD), puis ii) déterminer, pour chaque entité logique ($EL_k$) de ladite zone de synchronisation (ZS), une valeur ($V_k$) représentative de la différence de temps entre son heure de réception ($HRR_k$) et l'heure de réception ($HRR_k$) la plus récente parmi celles desdites entités logiques, et iii) ordonner à chaque entité logique ($EL_k$) de ladite zone de synchronisation (Zs) d'attendre pendant une période égale à la valeur ($V_k$) qui a été déterminée pour celle-ci avant de retransmettre chaque paquet reçu de ladite source de diffusion et/ou de multidiffusion (SD) aux terminaux (MS) situés dans sa zone de synchronisation (ZS).

2. Procédé selon la revendication 1, **caractérisé en ce que** pour chaque entité logique ($EL_k$) de ladite zone de synchronisation (ZS), durant une procédure précédente, on détermine ce qui suit : son heure locale ($HLR_k$) par rapport à ladite horloge de référence (CR), puis l'intervalle ($\Delta_k$) entre cette heure locale ($HLR_k$) et l'heure (HR) par rapport à ladite horloge de référence (CR) au moment où ladite heure locale ($HLR_k$) est déterminée.

3. Procédé selon la revendication 2, **caractérisé en ce que** lorsqu'un paquet sélectionné est reçu de ladite source de diffusion et/ou de multidiffusion (SD), chaque entité logique ($EL_k$) de ladite zone de synchronisation (ZS) note l'heure ($HLRP_k$) à laquelle ledit paquet a été reçu, par rapport à son horloge locale ($CL_k$), puis transmet un message de synchronisation comprenant ladite heure de réception ($HLRP_k$) à un dispositif (SD) sélectionné, et **en ce que**, pour chacune desdites entités logiques ($EL_k$) de ladite zone de synchronisation (ZS), l'heure ($HRR_k$), par rapport à

ladite horloge de référence (CR), à laquelle ladite entité a reçu ledit paquet sélectionné est estimée, sur la base de son intervalle ($\Delta_k$) déterminé et de l'heure locale ($HLRP_k$) contenue dans son message de synchronisation reçu.

4. Procédé selon la revendication 3, **caractérisé en ce que**, pour chacune desdites entités logiques ($EL_k$) de ladite zone de synchronisation (ZS), l'heure ($HRR_k$), par rapport à ladite horloge de référence (CR), à laquelle ladite entité a reçu ledit paquet sélectionné, est estimée en soustrayant son intervalle ($\Delta_k$) déterminé de l'heure locale ($HLRP_k$) contenue dans son message de synchronisation reçu.

5. Procédé selon l'une quelconque des revendications 2 à 4, **caractérisé en ce que** durant ladite procédure précédente, un message auxiliaire est transmis à chaque entité logique ($EL_k$) de ladite zone de synchronisation (ZS), l'heure ($HTM_k$) à laquelle ce message auxiliaire est transmis, par rapport à ladite horloge de référence (CR), est enregistrée, et ce message auxiliaire est ensuite communiqué à une dispositif (SD) sélectionné, **en ce que** chaque entité logique ($EL_k$) note l'heure locale ($HRAL_k$), par rapport à son horloge locale ($CL_k$) lorsqu'elle reçoit ledit message auxiliaire, puis transmet audit dispositif (SD) sélectionné un message de réponse auxiliaire comprenant ladite heure locale ($HRAL_k$), et **en ce que** ledit dispositif (SD) sélectionné note l'heure ($HRAM_k$), par rapport à ladite horloge de référence (CR), à laquelle il reçoit chaque message de réponse auxiliaire provenant d'une entité logique ($EL_k$) de ladite zone de synchronisation (ZS), puis, pour chacune de ces entités logiques ($EL_k$), son intervalle ($\Delta_k$) est déterminé sur la base de ladite heure de transmission du message auxiliaire ($HTM_k$), de ladite heure de réception du message auxiliaire ($HRAM_k$) et de ladite heure locale ($HRAL_k$) contenue dans son message de réponse auxiliaire.

6. Procédé selon la revendication 5, **caractérisé en ce que** chaque intervalle ($\Delta_k$) est déterminé en utilisant la formule

$$\Delta_k = HRAL_k - \left( \frac{HTM_k + HRAM_k}{2} \right).$$

7. Dispositif (D) pour synchroniser des entités logiques d'accès radio ($EL_k$) présentant chacune une horloge locale ($CL_k$) et faisant partie d'un réseau de communication sans fil capable de diffuser et/ou de multidiffuser des paquets de données définissant un contenu entre une source de diffusion et/ou de multidiffusion (SD) et des terminaux de communication mobile (MS), par l'intermédiaire d'entités logiques ($EL_k$), comprenant des moyens de calcul (MC) configurés pour i) estimer, pour chaque entité logique ($EL_k$) d'une zone de synchronisation (ZS) dudit réseau, l'heure ($HRR_k$), par rapport à une horloge de référence (CR), à laquelle ladite entité a reçu un paquet sélectionné à partir de ladite source de diffusion et/ou de multidiffusion (SD), puis pour ii) déterminer, pour chaque entité logique ($EL_k$) de ladite zone de synchronisation (ZS), une valeur ($V_k$) représentative de la différence de temps entre son heure de réception ($HRR_k$) et l'heure de réception ($HRR_k$) la plus récente parmi celles desdites entités logiques, et pour iii) ordonner à chaque entité logique ($EL_k$) de ladite zone de synchronisation (Zs) d'attendre pendant une période égale à la valeur ($V_k$) qui a été déterminée pour celle-ci avant de retransmettre chaque paquet reçu de ladite source de diffusion et/ou de multidiffusion (SD) aux terminaux (MS) situés dans sa zone de synchronisation (ZS).

8. Dispositif selon la revendication 7, **caractérisé en ce que** lesdits moyens de calcul (MC) sont configurés pour déterminer, pour chaque entité logique ($EL_k$) de ladite zone de synchronisation (ZS), pendant une précédente procédure : son heure locale ($HLR_k$) par rapport à ladite horloge de référence (CR), puis l'intervalle ($\Delta_k$) entre l'heure locale ($HLR_k$) et l'heure (HR) par rapport à ladite horloge de référence (CR) au moment où ladite heure locale ($HLR_k$) est déterminée.

9. Dispositif selon la revendication 8, **caractérisé en ce que** lesdits moyens de calcul (MC) sont configurés pour estimer, pour chacune desdites entités logiques ($EL_k$) de ladite zone de synchronisation (ZS), l'heure ($HRR_k$), par rapport à ladite horloge de référence (CR), à laquelle ladite entité a reçu ledit paquet sélectionné, sur la base de son intervalle ($\Delta_k$) déterminé et de l'heure locale ($HLRP_k$) contenue dans son message de synchronisation reçu transmis par ladite entité logique ($EL_k$) en réponse à la réception dudit paquet sélectionné, et indiquant l'heure à laquelle ledit paquet a été reçu par rapport à son horloge locale ($CL_k$).

10. Dispositif selon la revendication 9, **caractérisé en ce que** lesdits moyens de calcul (MC) sont configurés pour estimer, pour chacune desdites entités logiques ($EL_k$) de ladite zone de synchronisation (ZS), l'heure ($HRR_k$), par rapport à ladite horloge de référence (CR), à laquelle ladite entité a reçu ledit paquet sélectionné, en soustrayant son intervalle ($\Delta_k$) déterminé de l'heure locale ($HLRP_k$) contenue dans son message de synchronisation reçu.

**11.** Dispositif selon l'une quelconque des revendications 8 à 10, **caractérisé en ce que** durant ladite procédure précédente, lesdits moyens de calcul (MC) sont configurés pour i) générer un message auxiliaire, adressé auxdites entités logiques ($EL_k$) de ladite zone de synchronisation (ZS), demandant qu'elles transmettent leurs heures locales auxquelles le message auxiliaire a été reçu ($HRAL_k$) par rapport à leurs horloges locales ($CL_k$), ii) enregistrer l'heure ($HTM_k$) à laquelle ce message auxiliaire a été transmis, par rapport à l'horloge de référence, iii) enregistrer l'heure ($HRAM_k$) à laquelle chaque message de réponse auxiliaire a été reçu à partir d'une entité logique ($EL_k$) de la zone de synchronisation, par rapport à l'horloge de référence, et pour iv) déterminer, pour chacune de ces entités, son intervalle ($\Delta_k$) sur la base de l'heure à laquelle le message auxiliaire a été transmis ($HTM_k$), de l'heure à laquelle son message de réponse auxiliaire a été reçu ($HRAM_k$), et de l'heure locale ($HRAL_k$) contenue dans son message de réponse auxiliaire.

**12.** Dispositif selon la revendication 11 **caractérisé en ce que** lesdits moyens de calcul (CM) sont configurés pour déterminer chaque intervalle ($\Delta_k$) au moyen de la formule

$$\Delta_k = HRAL_k - \left( \frac{HTM_k + HRAM_k}{2} \right).$$

**13.** Dispositif de réseau (SD), **caractérisé en ce qu'**il comprend un dispositif de synchronisation (D) selon l'une quelconque des revendications 7 à 12.

**14.** Dispositif de réseau selon la revendication 13, **caractérisé en ce qu'**il constitue une source de diffusion et/ou de multidiffusion (SD) de paquets de données définissant un contenu pour un réseau de communication sans fil.

Sole figure

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9325012 A